# EUROPEAN PATENT APPLICATION

(11) **EP 2 696 578 A1**
(43) Date of publication of application: **12.02.2014**
(21) Application number: 12765830.0
(22) Date of filing: 30.01.2012
(51) Int. Cl.: H04N 7/173, G06F 17/30, H04N 5/765, H04N 5/91

(54) **VIDEO PROCESSING SYSTEM, VIDEO PROCESSING METHOD, VIDEO PROCESSING DEVICE, METHOD FOR CONTROLLING SAME, AND RECORDING MEDIUM STORING CONTROL PROGRAM**

(30) Priority: 25.03.2011 JP 2011067642
(71) Applicant: NEC Corporation, Tokyo 108-8001 (JP)
(72) Inventor: HARADA Hiroo, Tokyo 108-8001 (JP); FUJITA Naotake, Tokyo 108-8001 (JP)
(74) Representative: Betten & Resch
(86) International application number: PCT/JP2012/051924
(87) International publication number: WO 2012/132530

(57) **Abstract**

A system of this invention is a video processing system for outputting additional information to be added to a video content. This video processing system includes a frame feature extractor that extracts a frame feature of a frame included in an arbitrary video content, a video content extractor that extracts a video content group having a scene formed from a series of a plurality of frames in the arbitrary video content by comparing frame features of the arbitrary video content extracted by the frame feature extractor with frame features of another video contents, the video content group including an original video content with the scene unaltered and one or more derivative video contents with the scene altered, and an additional information extractor that extracts additional information added to the scene of the extracted video content group. With this arrangement, additional information added to a video content group including an identical scene can be referred to from one video content.

## Description

### TECHNICAL FIELD

The present invention relates to a technique of adding information to a video under viewing.

### BACKGROUND ART

Patent literature 1 discloses a technique of registering the features of contents including moving images and additional information such as subtitles and voice commentaries in advance in association with each other, searching for a subtitle or voice commentary based on a feature extracted from a reproduced content, and synchronously reproducing the content and the subtitle or voice commentary. Patent literature 2 discloses a technique of extracting, from each frame of a video content, a frame feature that characterizes the frame image using a small quantity of information.

### CITATION LIST

### PATENT LITERATURE

Patent literature 1: Japanese Patent Laid-Open No. 2008-166914
Patent literature 2: International Publication No. 2010/084714

### SUMMARY OF THE INVENTION

### TECHNICAL PROBLEM

Everywhere in the world, there exist derivative contents generated by applying various kinds of correction and editing such as scene cut, scene insertion, subtitle insertion, mosaicing, and tone change to original moving image contents. Conventionally, additional information is registered individually for each of such derivative contents and original moving image contents. However, a demand for total additional information management has arisen such that additional information registered for only one of an original moving image content and its derivative content or two derivative contents can be referred to for the same scene of the other. Additional information also needs to be managed not for each moving image content but for one scene or one frame that is a part of a moving image content. Note that in this specification, a created original content will be referred to as an "original (video) content", and a content generated by applying alteration such as correction or editing to the "original (video) content" will be referred to as a "derivative (video) content" hereinafter. In addition, a plurality of video contents including an "original (video) content" and a "derivative (video) content" will be referred to as a "video content group". A series of continuous frames from a specific frame to another specific frame will be referred to as a "scene".

In patent literature 1, features extracted from a moving image are form features representing, for example, the area and circumferential length of an object, temporal changes in shading features of pixels, or the velocity vector images (optical flows) of points on a screen. These features characterize a specific moving image content, and the specific content and specific additional information are only associated with each other. This system functions only when the content to which the information is added is specified in advance among the various moving image contents existing all over the world. For this reason, additional information linked with a specific one of a plurality of video contents having derivative relationships cannot be referred to in association with another derivative content. It is not possible to associate the additional information with one scene or one frame of a moving image content, either. Hence, even if the frame feature of patent literature 2 is applied as the feature of patent literature 1, it is impossible to show the association between the derivative content and the additional information or the association between one scene or one frame and the additional information.

The present invention enables to provide a technique of solving the above-described problem.

### SOLUTION TO PROBLEM

One aspect of the present invention provides a video processing system for outputting additional information to be added to a video content, comprising:
a frame feature extractor that extracts a frame feature of a frame included in an arbitrary video content;
a video content extractor that extracts a video content group having a scene formed from a series of a plurality of frames in the arbitrary video content by comparing frame features of the arbitrary video content extracted by said frame feature extractor with frame features of other video contents, the video content group including an original video content with the scene unaltered and one or more derivative video contents with the scene altered; and
an additional information extractor that extracts additional information added to the scene of the extracted video content group.

Another aspect of the present invention provides a video processing method of outputting additional information to be added to a video content, comprising:
extracting a frame feature of a frame included in an arbitrary video content;
extracting a video content group having a scene formed from a series of a plurality of frames in the arbitrary video content by comparing the frame features of the arbitrary video content extracted in said frame feature extracting step with frame features of other video contents, the video content group including an original video content with the scene unaltered and one or more derivative video contents with the scene altered; and
extracting additional information added to the scene of the extracted video content group.

Still other aspect of the present invention provides a video processing apparatus for outputting additional information to be added to a video content, comprising:
a frame feature extractor that extracts a frame feature of a frame included in an arbitrary video content;
a video content extractor that extracts a video content group having a scene formed from a series of a plurality of frames in the arbitrary video content by comparing frame features of the arbitrary video content extracted by said frame feature extractor with frame features of other video contents, the video content group including an original video content with the scene unaltered and one or more derivative video contents with the scene altered;
an additional information extractor that extracts additional information added to the scene of the extracted video content group; and
an additional information notification unit that notifies the additional information added to the scene of the video content group extracted by said additional information extractor.

Still other aspect of the present invention provides a control method of a video processing apparatus for outputting additional information to be added to a video content, comprising:
extracting a frame feature of a frame included in an arbitrary video content;
extracting a video content group having a scene formed from a series of a plurality of frames in the arbitrary video content by comparing frame features of the arbitrary video content extracted in said frame feature extracting step with frame features of other video contents, the video content group including an original video content with the scene unaltered and one or more derivative video contents with the scene altered;
extracting additional information added to the scene of the extracted video content group; and
notifying the additional information added to the video content group extracted in said additional information extracting step.

Still other aspect of the present invention provides a computer-readable storage medium storing a control program of a video processing apparatus for outputting additional information to be added to a video content, the control program causing a computer to execute the steps of:
extracting a frame feature of a frame included in an arbitrary video content;
extracting a video content group having a scene formed from a series of a plurality of frames in the arbitrary video content by comparing frame features of the arbitrary video content extracted in said frame feature extracting step with frame features of other video contents, the video content group including an original video content with the scene unaltered and one or more derivative video contents with the scene altered;
extracting additional information added to the scene of the extracted video content group; and
notifying the additional information added to the video content group extracted in said additional information extracting step.

Still other aspect of the present invention provides a video processing apparatus for adding additional information to a video content and outputting the added video content, comprising:
a frame feature extractor that extracts a frame feature of a frame included in an arbitrary video content;
a frame feature transmitter that transmits the frame feature extracted by said frame feature extractor;
an additional information receiver that receives the additional information added to a scene of a video content group from a transmission destination of the frame feature, the scene of said video content group being extracted based on frame features of a scene formed from a series of a plurality of frames of the arbitrary video content, said video content group including an original video content with the scene unaltered and one or more derivative video contents with the scene altered; and
a video content reproducing unit that reproduces the arbitrary video content with adding the additional information to the arbitrary video content.

Still other aspect of the present invention provides a control method of a video processing apparatus for adding additional information to a video content and outputting the added video content, comprising:
extracting a frame feature of a frame included in an arbitrary video content;
transmitting the frame feature extracted in the extracting the frame feature;
receiving the additional information added to a scene of a video content group from a transmission destination of the frame feature, the scene of said video content group being extracted based on frame features of a scene formed from a series of a plurality of frames of the arbitrary video content, said video content group including an original video content with the scene unaltered and one or more derivative video contents with the scene altered; and
reproducing the arbitrary video content with adding the additional information to the arbitrary video content.

Still other aspect of the present invention provides a computer-readable storage medium storing a control program of a video processing apparatus for adding additional information to a video content and outputting the added video content, the control program causing a computer to execute the steps of:
extracting a frame feature of a frame included in an arbitrary video content;
transmitting the frame feature extracted in the extracting the frame feature;
receiving the additional information added to a scene of a video content group from a transmission destination of the frame feature, the scene of said video content group being extracted based on frame features of a scene formed from a series of a plurality of frames of the arbitrary video content, said video content group including an original video content with the scene unaltered and one or more derivative video contents with the scene altered; and
reproducing the arbitrary video content with adding the additional information to the arbitrary video content.

### ADVANTAGEOUS EFFECTS OF INVENTION

According to the present invention, a plurality of derivative contents created based on the same video content and the original video content can mutually refer to additional information added to other video contents including the same scene.

### BRIEF DESCRIPTION OF THE DRAWINGS

Fig. 1 is a block diagram showing the arrangement of a video processing system according to the first embodiment of the present invention;
Fig. 2 is a block diagram showing the arrangement of a video processing system according to the second embodiment of the present invention;
Fig. 3 is a sequence chart showing the operation procedure of the video processing system according to the second embodiment of the present invention;
Fig. 4 is a view showing a detailed example of the operation of the video processing system according to the second embodiment of the present invention;
Fig. 5A is a block diagram showing the arrangement of a frame feature extractor according to the second embodiment of the present invention;
Fig. 5B is a view showing processing of the frame feature extractor according to the second embodiment of the present invention;
Fig. 5C is a view showing the extraction regions of the frame feature extractor according to the second embodiment of the present invention;
Fig. 6 is a view showing the arrangements of a frame feature DB, a scene DB, and an additional information DB according to the second embodiment of the present invention and the association between them;
Fig. 7 is a block diagram showing the hardware arrangement of a video processing apparatus according to the second embodiment of the present invention;
Fig. 8 is a view showing the arrangement of an additional information search table according to the second embodiment of the present invention;
Fig. 9A is a flowchart showing the procedure of preparing DBs by the video processing apparatus according to the second embodiment of the present invention;
Fig. 9B is a flowchart showing the video processing procedure of the video processing apparatus according to the second embodiment of the present invention;
Fig. 9C is a flowchart showing the additional information search processing procedure of the video processing apparatus according to the second embodiment of the present invention;
Fig. 10 is a block diagram showing the hardware arrangement of a video viewing terminal according to the second embodiment of the present invention;
Fig. 11 is a flowchart showing the additional information processing procedure of the video viewing terminal according to the second embodiment of the present invention;
Fig. 12 is a view showing the arrangement of a frame feature/additional information DB of a video processing system according to the third embodiment of the present invention;
Fig. 13 is a sequence chart showing the operation procedure of a video processing system according to the fourth embodiment of the present invention;
Fig. 14 is a block diagram showing the arrangement of a video processing system according to the fifth embodiment of the present invention; and
Fig. 15 is a view showing a table representing viewer setting information concerning additional information in a video processing system according to the sixth embodiment of the present invention.

### DESCRIPTION OF THE EMBODIMENTS

Preferred embodiments of the present invention will now be described in detail with reference to the drawings. It should be noted that the relative arrangement of the components, the numerical expressions and numerical values set forth in these embodiments do not limit the scope of the present invention unless it is specifically stated otherwise.

### [First Embodiment]

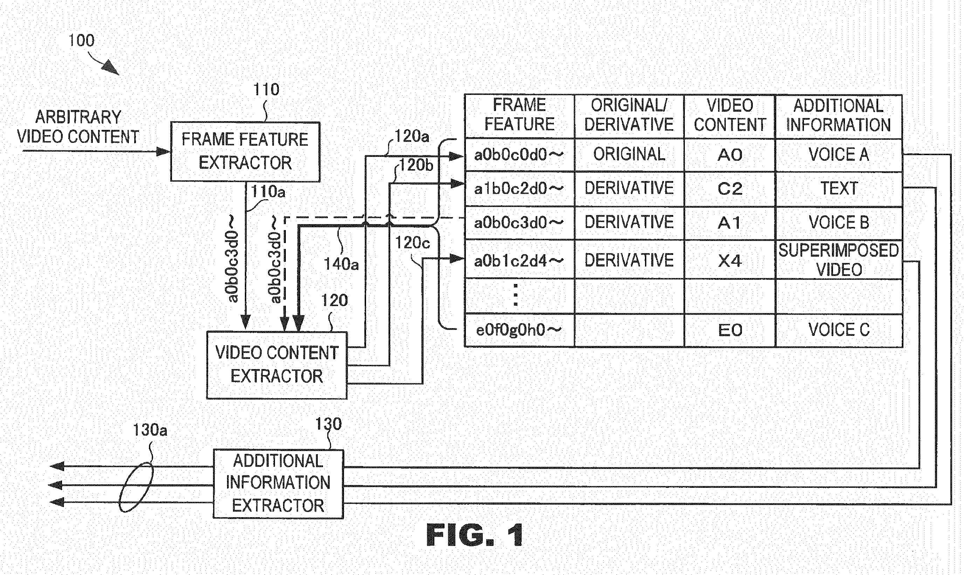

A video processing system 100 according to the first embodiment of the present invention will be described with reference to Fig. 1. The video processing system 100 outputs additional information to be added to a video content.

As shown in Fig. 1, the video processing system 100 includes a frame feature extractor 110, a video content extractor 120, and an additional information extractor 130. The frame feature extractor 110 extracts a frame feature 110a of a frame included in an arbitrary video content. The video content extractor 120 extracts video content group 120a to 120c having a scene formed from a series of plurality of frames in the arbitrary video content by comparing the frame feature 110a of the arbitrary video content extracted by the frame feature extractor 110 with frame features 140a of other video contents. The video content group includes the original video content 120a with unaltered scenes and the derivative video contents 120b and 120c with altered scenes. The additional information extractor 130 extracts additional information 130a added to the scenes of the extracted video contents 120a to 120c.

According to this embodiment, additional information added to a video content group including identical scenes can be referred to from one video content.

### [Second Embodiment]

In the second embodiment, frame features transmitted from various kinds of video viewing terminals each including a frame feature extractor are compared with frame features stored in a video processing apparatus, thereby finding derivative video contents including a scene of the same original video content. Pieces of additional information added to the original video content and the derivative video contents are acquired and added to the scene of the video content under viewing. According to this embodiment, additional information added to a video content group including identical scenes can be added to a video content under viewing.

### <Arrangement of Video Processing System>

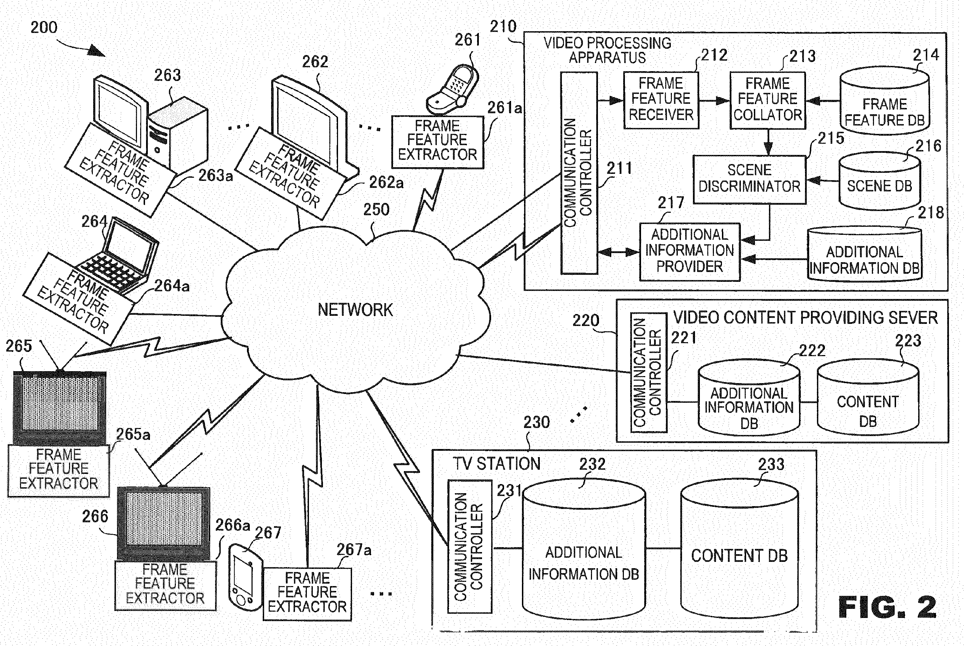

Fig. 2 is a block diagram showing the arrangement of a video processing system 200 according to this embodiment. Note that Fig. 2 illustrates only functional components associated with this embodiment, and functional components having other functions are not illustrated to avoid complexity.

Referring to Fig. 2, reference numeral 210 denotes a video processing apparatus. The video processing apparatus 210 includes a frame feature DB 214 that stores a frame feature characterizing each frame of a video content in association with a frame ID that identifies each frame. The video processing apparatus 210 also includes a scene DB 216 that stores a series of frame sequences having a prejudged length in association with a scene ID that identifies the scene formed from the frame sequence. Note that the series of frame sequences is specified by a corresponding frame feature sequence. The video processing apparatus 210 also includes an additional information DB 218 that stores additional information added to a derivative scene derived from the such scene in association with the scene ID. Note that the derivative scene is selected based on comparison of the frame feature sequence between the scene and the derivative scene.

The video processing apparatus 210 includes a communication controller 211 that performs communication via a network 250. Note that the communication can be either wireless or wired. A frame feature receiver 212 receives a series of frame feature sequences of a video content via the communication controller 211. A frame feature collator 213 collates the series of frame feature sequences received by the frame feature receiver 212 with the frame feature sequences stored in the frame feature DB 214. If the difference is equal to or smaller than a prejudged threshold, the frame feature collator 213 judges that the frame feature sequences match. A scene discriminator 215 receives a matching signal from the frame feature collator 213, discriminates a scene formed from a frame sequence corresponding to the series of frame feature sequences from the scene DB 216, and outputs a scene ID that identifies the discriminated scene. An additional information provider 217 searches the additional information DB 218 for additional information based on the scene ID output from the scene discriminator 215, and provides the additional information of the search result via the communication controller 211.

Reference numeral 220 in Fig. 2 denotes a video content providing server for providing a video content. The video content providing server 220 includes a content DB 223 that stores video contents to be provided, and an additional information DB 222 that stores additional information added to the contents. Note that the content DB 223 and the additional information DB 222 may be provided as an integrated DB.

Reference numeral 230 in Fig. 2 denotes a TV station that produces and provides a video content. The TV station 230 also includes a content DB 233 that stores video contents to be provided, and an additional information DB 232 that stores additional information added to the contents. Note that the content DB 233 and the additional information DB 232 may be provided as an integrated DB.

Reference numerals 261 to 267 in Fig. 2 denote video viewing terminals, each of that transmits the frame features of a video content to the video processing apparatus 210 and receives providing of associated additional information via a network 250. The video viewing terminals 261 to 267 include a TV set, a personal computer (to be referred to as a PC hereinafter), and a portable terminal such as a mobile phone. However, the video viewing terminals are not limited to the types shown in Fig. 2. Any communication devices capable of viewing a video are applicable. However, to receive providing of additional information in this embodiment, the video viewing terminals 261 to 267 need to respectively have frame feature extractors 261a to 267a which extract a frame feature from each frame of a video content. Alternatively, the video viewing terminals 261 to 267 need to be able to download and execute a frame feature extraction program.

With this arrangement, the video viewing terminals 261 to 267 transmit the frame features of video contents extracted using the frame feature extractors 261a to 267a to the video processing apparatus 210. The video processing apparatus 210 performs comparison with the stored frame features and extracts additional information added to scenes with matching frame features in associated video contents including the original video content and the derivative video contents, and provides the additional information to the video viewing terminals 261 to 267. Additional information is extracted not only from the additional information DB 218 in the video processing apparatus 210 but also from the additional information DB 222 of the video content providing server 220 and the additional information DB 232 of the TV station 230 and provided. Note that the video processing apparatus 210 is provided independently of the video content providing server 220 or the TV station 230 in Fig. 2 but may be installed in the video content providing server 220 or the TV station 230.

In Fig. 2, each of the video content providing server 220 and the TV station 230 which are the service entities has the additional information DB and the content DB. However, the additional information DBs and the content DBs of a plurality of service entities may integrally be controlled in cooperation or held together. Alternatively, a service entity for exclusively managing the additional information DBs and the content DBs may be provided.

### <Operation Procedure of Video Processing System>

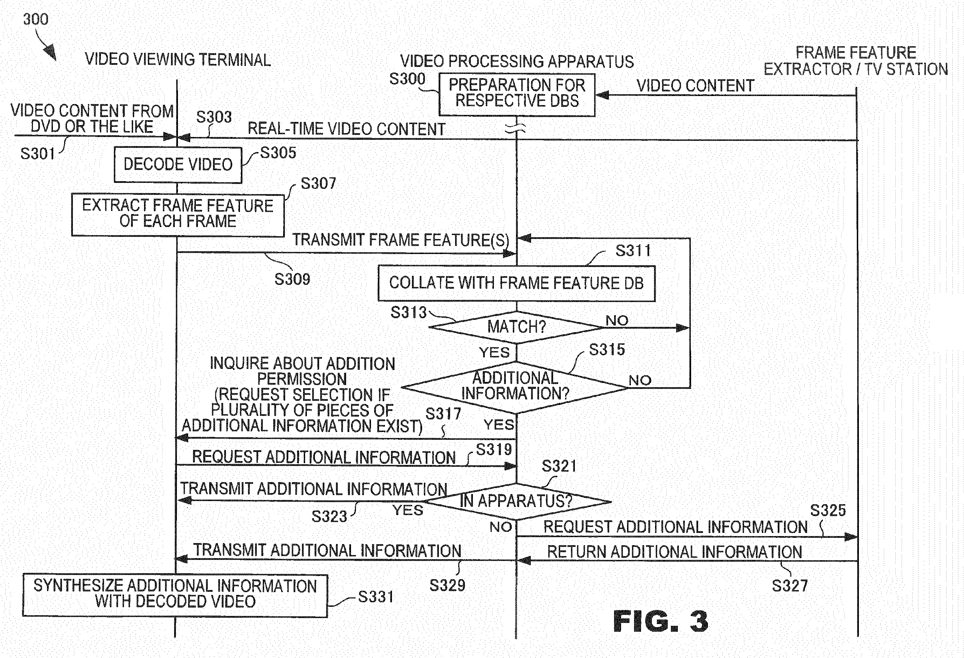

Fig. 3 is a sequence chart showing an operation procedure 300 of the video processing system according to this embodiment. Fig. 3 shows the information transmission sequence between the constituent elements shown in Fig. 2 in more detail.

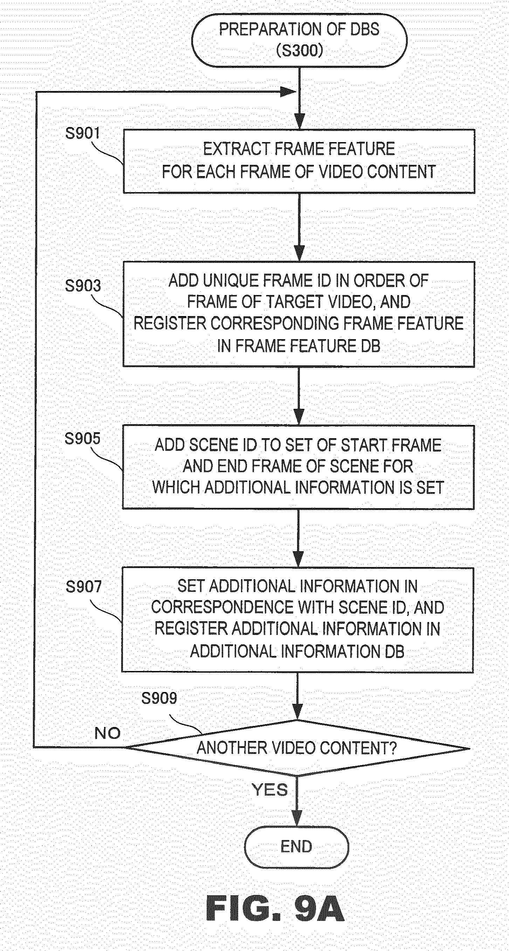

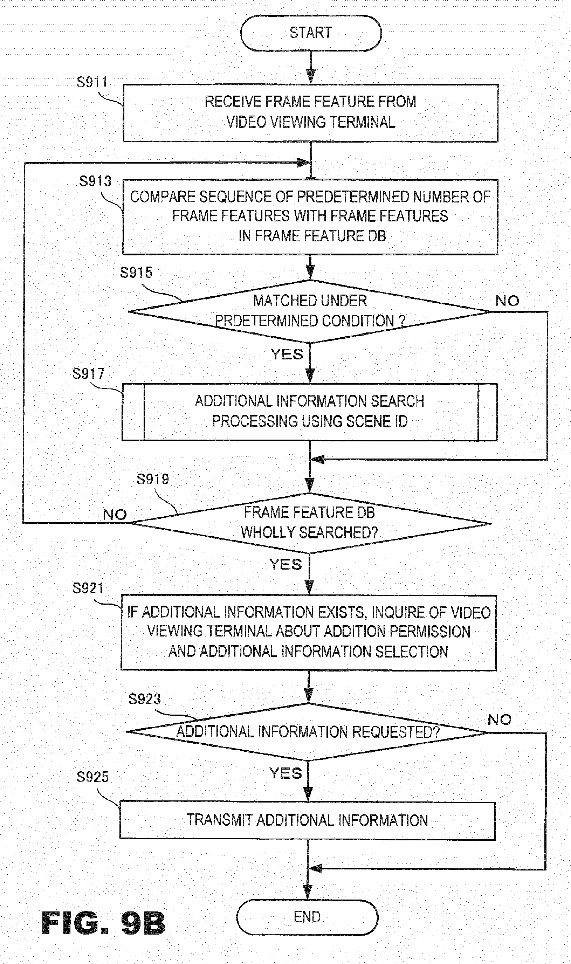

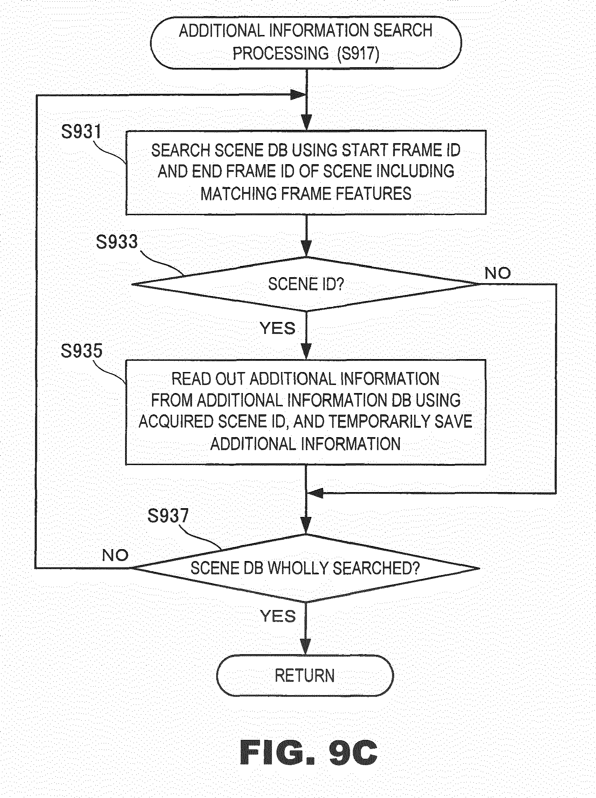

In step S300, the video processing apparatus 210 prepares the DBs as preparation for the operation according to this embodiment. To prepare the DBs, the video processing apparatus 210 receives video contents distributed from the video content providing server 220 or the TV station 230 and extracts the frame features, thereby preparing the DBs (see Fig. 9). Note that to reduce communication traffic, the video content providing server 220 or the TV station 230 may be provided with the frame feature extractor or download a frame feature program to transmit the frame features to the video processing apparatus 210. In the DB preparation processing of step S300, the scene DB 216 and the additional information DB 218 can be prepared by finding not only scenes formed from identical frame images but also scenes of corrected or edited derivative video contents, or conversely, the original video content from the derivative video contents. After completion of the preparation of the DBs, the video processing apparatus 210 starts the service of providing additional information to the video viewing terminals 261 to 267 according to this embodiment. Note that the DB preparation processing need only be executed once before the start of the additional information providing service. In case of appearance of a new (or derivative) video content as well, the DB preparation processing is repeated, and the DBs are updated. The DB updating processing is also executed when new additional information is created for an existing video content.

In step S301, a video content from a DVD (Digital Versatile Disc.) or the like is input to each video viewing terminal. On the other hand, in step S303, a video content is input from the video content providing server 220 or the TV station 230 to each video viewing terminal in real time. In step S305, each video viewing terminal decodes the video from the input video content. In step S307, each video viewing terminal extracts a frame feature for each frame of the decoded video content. Note that the frame feature may be extracted from the decoded video content whose video is being reproduced in the video viewing terminal. However, the frame feature extraction timing is not limited to this. For example, the frame feature may be extracted simply during video content reception, for example, during recording. Alternatively, when a video content has been stored in the video viewing terminal or a connected DB, the frame features of the stored video content may be extracted at the timing the stored video content is detected or during an idle time after detection where the video viewing terminal is not operating. In step S309, the extracted frame features are transmitted to the video processing apparatus 210 in the order of the frames of the video content.

The video processing apparatus 210 receives the frame features transmitted from the video viewing terminal in the order of the frames of the video content. The video processing apparatus 210 stores the frame features while adding frame IDs serving as unique identifiers to the respective frame features. The frame features can be either temporarily stored when receiving providing of additional information or permanently stored in the frame feature DB 214 together with an identifier for specifying the video content and used when receiving providing of additional information later.

In step S311, the video processing apparatus 210 collates the series of received frame feature sequences with the frame feature sequences in the frame feature DB 214. In step S313, the video processing apparatus 210 determines based on the collation result whether the frame feature sequences match. In step S313, if the difference (for example, distance) obtained by the collation in step S311 is equal to or smaller than a prejudged threshold, it is judged that the frame feature sequences match. The collation processing of step S311 and the determination processing of step S313 allow to find not only identical frame images but also scenes of derivative video contents generated by alteration such as correction or editing, or conversely, the original video content from the derivative video contents. If no matching frame feature sequence exists in the frame feature DB 214, the next frame feature sequence is received, and the collation is repeated. If the frame feature sequences match, the process advances to step S315 to judge whether additional information is added to the scene of the video content having the matching frame feature sequence. If no additional information exists, the next frame feature sequence is received, and the collation is repeated. If additional information exists, in step S317, information representing all pieces of found additional information is transmitted to the video viewing terminal of the frame feature transmission source, thereby notifying the video viewing terminal of the additional information. The video processing apparatus inquires of the video viewing terminal about permission of additional information addition and selection of additional information.

The video viewing terminal receives the additional information. If addition of the additional information is permitted, the video viewing terminal requests the video processing apparatus 210 to add the selected additional information in step S319. Note that the inquiry of the video viewing terminal can be changed by the manner of the additional information addition service. For example, the video processing apparatus may recognize the frame feature transmission in step S309 as the permission of additional information addition and add the additional information. In this case, only when there are a plurality of pieces of additional information, the video processing apparatus inquires about the selection. If the additional information includes a voice and a subtitle, the video processing apparatus may directly add them and inquire about deletion.

Upon receiving the permission (request) of additional information addition, the video processing apparatus 210 judges in step S321 whether the additional information exists in the local apparatus. If the additional information exists in the local apparatus, the video processing apparatus 210 transmits the additional information to the video viewing terminal in step S323. On the other hand, if the additional information does not exist in the local apparatus, the video processing apparatus 210 requests the video content providing server 220 or TV station 230 that holds the video content and the additional information to provide the additional information in step S325. In step S327, if the additional information is returned in response to the additional information request, the video processing apparatus 210 transmits the received additional information to the video viewing terminal in step S329.

In step S331, the video viewing terminal controls and provides the received additional information so as to synthesize it with the decoded video. Note that when reproducing the decoded video on the display screen in step S305, the synthesized additional information is reproduced in step S331 together with the reproduced screen. In this case, synchronization of synthesis of the additional information with the reproduced video can be performed using a common time stamp or in real time in the video processing apparatus 210 or the video viewing terminal. This processing is not the gist of the present invention, and a detailed description thereof will be omitted. In addition, the additional information may be an operation displayed in an additional information display region of the screen, instead of being synthesized with the video. In addition, control may be done to download the additional information in advance, temporarily holding it in the storage of the video viewing terminal in association with the video content ID of the extraction source, and adding the additional information later when reproducing the video content of the extraction source.

### (Detailed Example of Operation of Video Processing System)

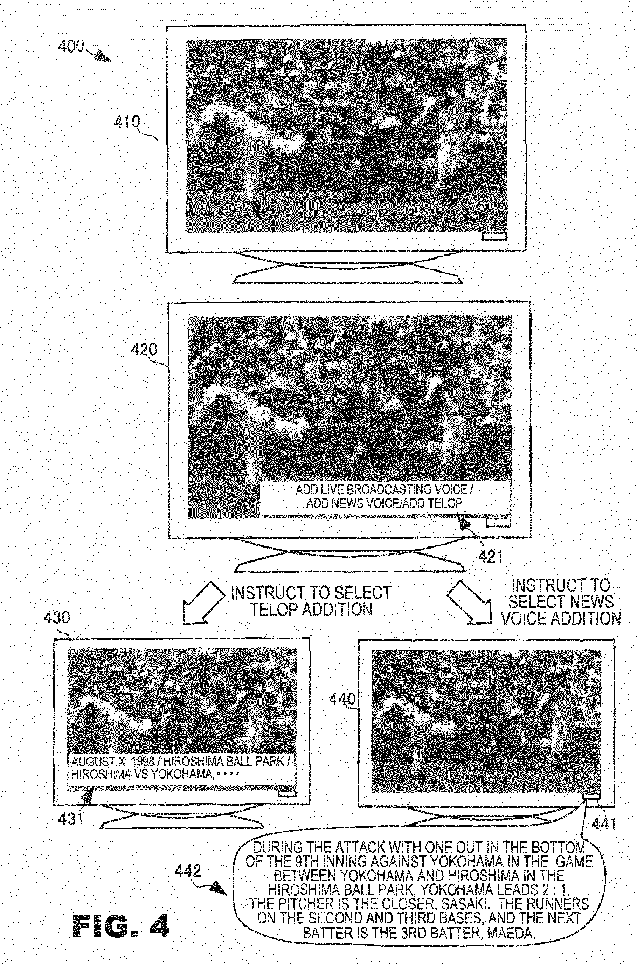

Fig. 4 is a view showing a detailed example 400 of the operation of the video processing system according to this embodiment. Fig. 4 shows an example in which the user is viewing one scene of a past baseball game by reproducing a recorded video or viewing a provided video library or a video in a TV program.

Reference numeral 410 denotes a video scene currently being viewed. A TV set serving one of the video viewing terminals extracts a frame feature sequence of a series of frames of this scene and transmits it to the video processing apparatus 210. The video processing apparatus 210 finds a scene of an original video content or a scene of derivative video content by collating the transmitted series of frame features with the frame feature DB. The video processing apparatus 210 searches the scene DB for additional information added to the scene. In this example, the original video content is a live broadcasting baseball game content.

In this example, the video processing apparatus finds additional information (live broadcasting voice) added to the scene of the original video content (live broadcasting content) of the scene 410 under viewing. The video processing apparatus also finds additional information (news voice) added to the scene reported in a derivative video content (news in another broadcasting station) of the game. The video processing apparatus also finds additional information (telops: texts) edited and inserted in a derivative video content (another sport news or TV program).

In 420 shown in Fig. 4, the above-described three pieces of additional information are found, and a message 421 (the message may also serve as a button) is displayed to inquire of the viewer which additional information should be added. The viewer can select one of the pieces of additional information and view the scene with the additional information. Without selection, the video processing apparatus judges that no additional information should be added.

Reference numeral 430 in Fig. 4 denotes a display when "telop" is selected. A telop 431 that is additional information originally not added is added to the scene of the video under viewing. On the other hand, reference numeral 440 in Fig. 4 denotes a display when "news voice" is selected. A news voice 442 that is additional information originally not added is added to the scene of the video under viewing and output from a speaker 441.

### (Arrangement and Processing of Frame Feature Extractor)

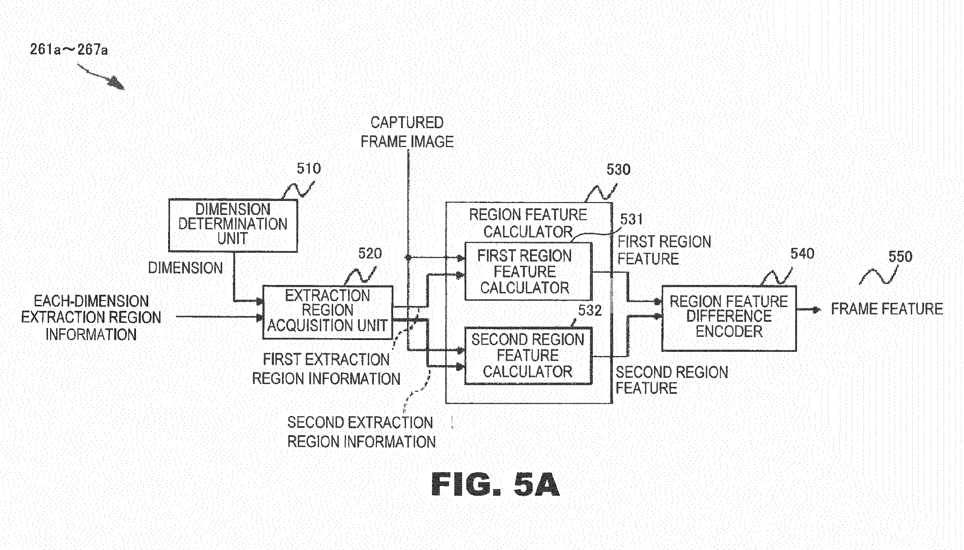

Fig. 5A is a block diagram showing the arrangement of each of the frame feature extractors 261a-267a according to this embodiment. The each of the frame feature extractors 261 a-267a applied in this embodiment is a functional component that extracts a video signature employed in standardization of MPEG7.

Referring to Fig. 5A, an output frame feature 550 is generated by providing a number of pairs of regions having different sizes or shapes in each frame of a captured video, quantizing (actually, ternarizing) a difference in average luminance value as a kind of region feature between a pair of regions and encoding the quantized values of the differences. A dimension determination unit 510 determines the number of region pairs. One dimension corresponds to one region pair. An extraction region acquisition unit 520 acquires the region pair of each dimension to calculate a frame feature in accordance with the determination of the dimension determination unit 510. A region feature calculator 530 includes a first region feature calculator 531 and a second region feature calculator 532, each of which calculates the average luminance as a kind of region feature of each region of the region pair of each dimension. A region feature difference encoder 540 calculates the difference of the average luminances as region features of respective regions of the region pair, quantizes and encodes the difference in accordance with a third threshold, and outputs the frame feature 550.

In this example, the region feature represented by the average luminance will be explained below. However, the region feature is not limited to the average luminance of the region. Another processing of the luminance or a frame feature other than the luminance is also applicable.

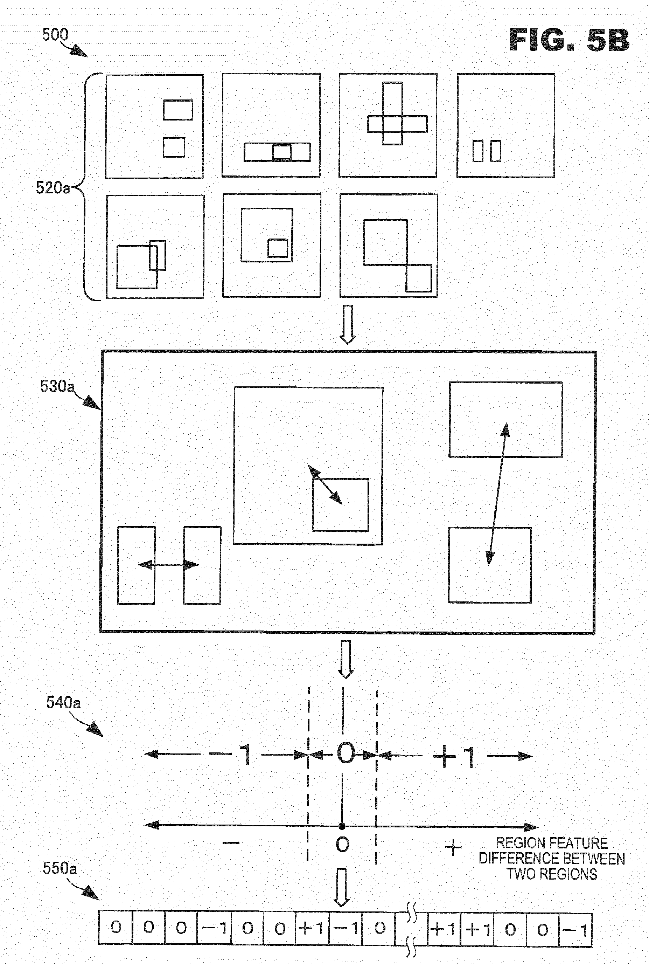

Fig. 5B is a view showing processing of the frame feature extractors according to this embodiment.

In Fig. 5B, 520a indicates several examples of region pairs acquired by the extraction region acquisition unit 520 shown in Fig. 5A. In 520a, each outer frame represents a frame, and each internal rectangle represents a region.

In Fig. 5B, 530a expresses the relationship of extracting regions of region pairs from the extraction region acquisition unit 520 and calculating the difference between the regions in a frame image. A state in which two regions of a region pair are extracted in the frame image, the average luminance of the pixels included in each region is calculated, and the difference of the average luminances is calculated is indicated by an arrow that connects the centers of the regions.

In Fig. 5B, 540a represents a state in which the calculated difference is quantized. In 540a, if the difference obtained by subtracting a second region feature from a first region feature in Fig. 5A is equal to or smaller than the difference serving as the third threshold indicated by the broken lines on both sides of the difference "0" (corresponding to a case in which the average luminances equal), "0" is the output value of quantization. If the difference is a positive (+) value on the positive side of the broken line, "+1" is the output value of quantization. If the difference is a negative (-) value on the negative side of the broken line, "-1" is the output value of quantization. The difference is thus encoded to the three values "-1", "0" and "+1" to decrease the data amount of each dimension and generate information of dimensions as many as possible, thereby facilitating separation of the frame features and decrease the calculation amount in comparison of the frame features. It is therefore unnecessary to limit to the example of the three values. Note that the third threshold indicated by the broken line is selected based on the ratio of "0" and quantized difference values in the distribution of difference values of all dimensions to be used. For example, a value with which the ratio of "0" and quantized difference values becomes 50% is selected.

In Fig. 5B, 550a represents an example of a frame feature generated by collecting the results of quantization of the differences. As a simple example, the frame feature is generated by arranging the quantized values of the differences in the one-dimensional direction in the order of dimension. Note that the frame feature is not limited to this example and need not always be obtained by simply arranging the quantized values of the differences in the one-dimensional direction in the order of dimension but may be generated by arranging the values in multidimensional directions or further applying an additional operation.

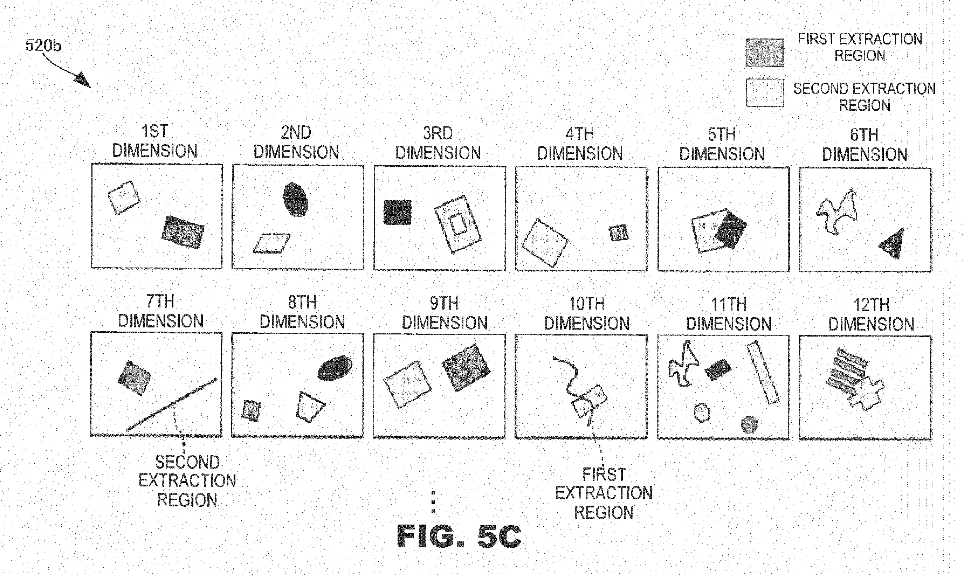

Fig. 5C is a view showing the extraction regions of the frame feature extractors according to this embodiment.

In Fig. 5B, 520a indicates the region pair of each dimension by two rectangular regions. However, to calculate a frame feature appropriately expressing a frame, a shape other than a rectangle may be preferable. Extraction regions shown in Fig. 5C exemplify region pairs each including two regions that are not rectangular. Several hundred dimensions can be set even when comparison of frame features in real time or comparison of video content frame feature groups that are sets of frame features by ternarizing each dimension, as indicated by 540a in Fig. 5B.

### <Arrangements of Frame Feature DB, Scene DB, and Additional Information DB and Association between Them>

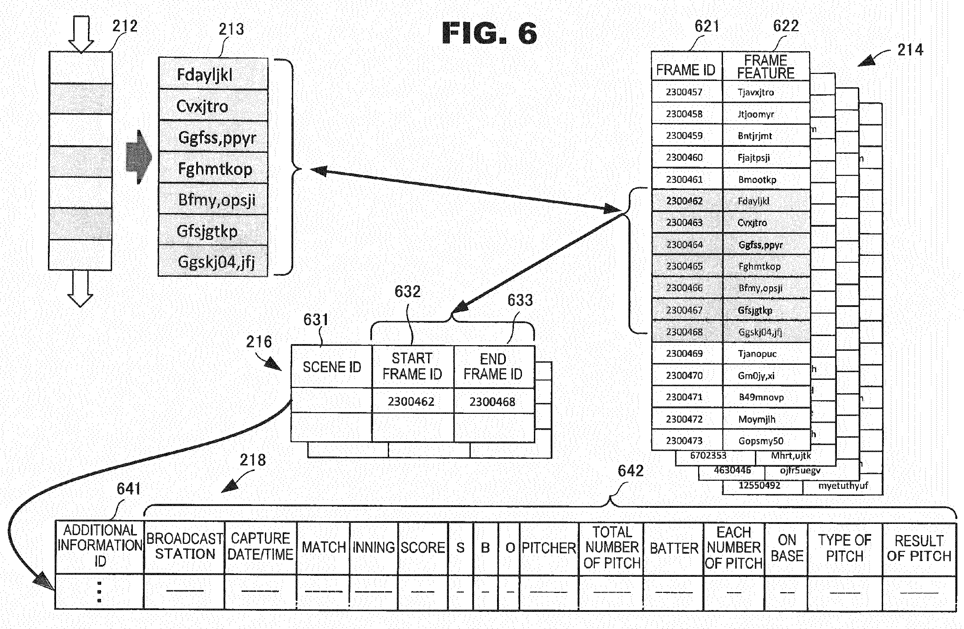

Fig. 6 is a view showing the arrangements of the frame feature DB 214, the scene DB 216, and the additional information DB 218 according to this embodiment and the association between them.

### (Frame Feature DB)

The frame feature DB 214 shown in Fig. 6 is a frame feature storage, in which a frame feature 622 extracted from a video content in accordance with Figs. 5A to 5C is sequentially stored in association with a frame ID 621 that specifies each frame in the video content. Note that the frame feature stored in the frame feature DB 214 is preferably managed on the video content or scene basis.

### (Frame Feature Receiver and Frame Feature Collator)

A frame feature received from a video viewing terminal is sequentially stored in the frame feature receiver 212 and shifted. A prejudged number of series of frame feature sequences are set from the frame feature receiver 212 to a frame feature buffer that constitutes the frame feature collator 213. Fig. 6 illustrates seven frame features in the frame feature buffer. The length of the frame feature buffer has a tradeoff relationship with the correctness and speed of collation, and an appropriate length is selected. It is also possible to prepare a buffer having a prejudged length based on the correctness of collation and calculate and set the length to be used in accordance with the association with the correctness and speed of collation.

The frame feature sequence set in the frame feature buffer is compared with the series of frame feature sequences in the frame feature DB 214 while shifting, thereby searching for a similar frame feature sequence. The similarity judgment by the collation is done by judging whether the comparison result (for example, distance calculation or root mean square) is equal to or less than a prejudged threshold. When a similar frame feature sequence is found, the start frame ID and end frame ID of the of the frame feature sequence are output.

### (Scene DB)

The scene DB 216 shown in Fig. 6 is a scene storage, in which a start frame ID 632 and an end frame ID 633 are stored in association with a scene ID 631 that specifies each scene. The start frame ID 632 and the end frame ID 633 can either match the start and end of the scene indicated by the scene ID 631 or be included in the scene indicated by the scene ID 631. According to the frame feature extraction method of this embodiment shown in Figs. 5A to 5C described above, a scene including more frames can be specified by collating a small number of series of frame feature sequences.

### (Additional Information DB)

The additional information DB 218 shown in Fig. 6 is an additional information storage, in which an additional information ID or an additional information group is stored from an original scene or derivative scene having the scene ID found based on the scene DB 216 or an original video content or derivative video content including the scene. The additional information DB 218 stores additional information 642 in association with each additional information ID 641. The additional information DB 218 shown in Fig. 6 stores the additional information 642 of the professional baseball game added to the video under reproduction in the detailed example shown in Fig. 4.

### <Hardware Arrangement of Video Processing Apparatus>

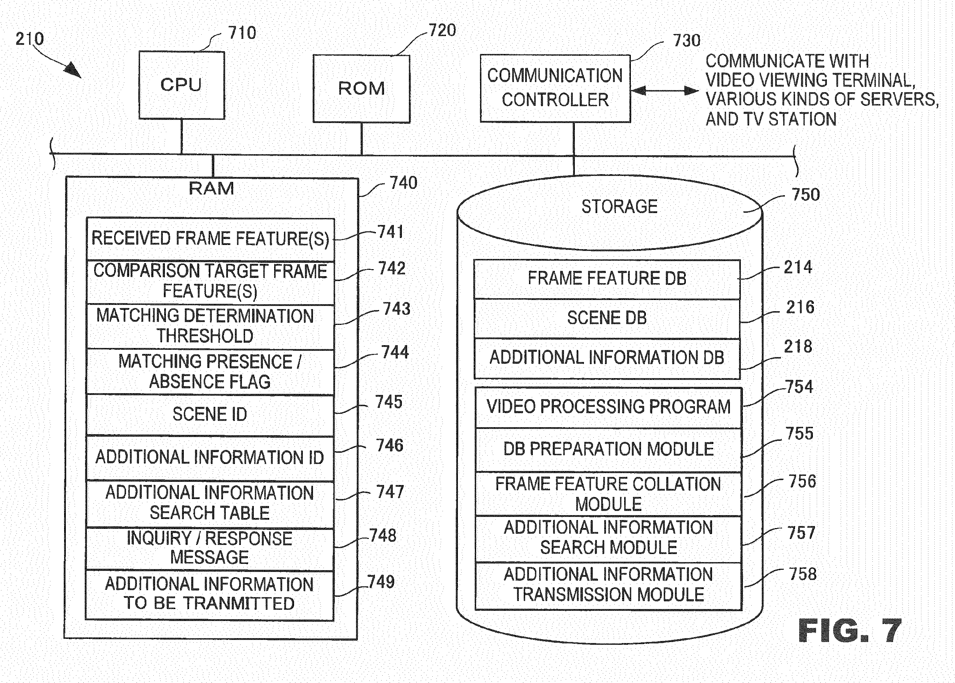

Fig. 7 is a block diagram showing the hardware arrangement of the video processing apparatus 210 according to this embodiment.

Referring to Fig. 7, a CPU 710 is a processor for arithmetic control and implements each functional component shown in Fig. 2 by executing a program. A ROM 720 stores initial data, permanent data of programs and the like, and the programs. A communication controller 730 communicates with the video viewing terminals 261 to 267 or each server/TV station. Note that TV broadcast waves and other communications may be separately controlled by a plurality of communication controllers. Communication can be either wireless or wired. However, in digital terrestrial TV broadcasting, processing can also be done using a common communication controller.

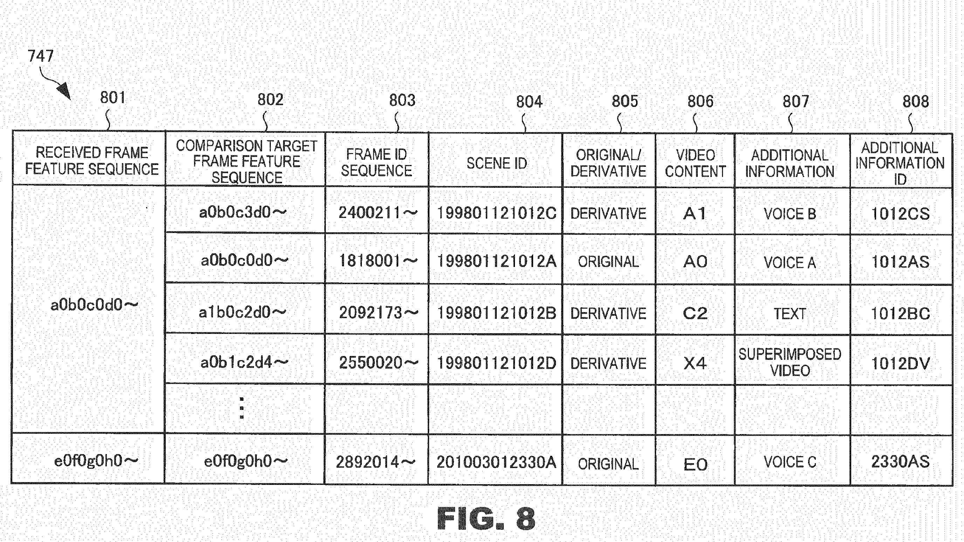

A RAM 740 is a random access memory used by the CPU 710 as a work area for temporary an area to store data necessary for implementing the embodiment is allocated in the RAM 740. Reference numeral 741 denotes a received frame feature(s) 741 received from a video viewing terminal. Note that the RAM also serves as the frame feature sequence buffer of the frame feature collator 213. A comparison target frame feature(s) 742 is compared with a frame feature sequence sequentially read out from the frame feature DB 214 and received. A matching judgment threshold 743 is used to judge whether the received frame feature 741 matches the comparison target frame feature 742. A matching presence/absence flag 744 represents the result of matching judgment. A scene ID 745 is obtained from the matching frame feature sequence. An additional information ID 746 specifies additional information detected based on the scene ID. An additional information search table 747 stores the processing result from the frame feature comparison to the additional information search (see Fig. 8). An inquiry/response message 748 includes a message to inquire of the video viewing terminal about the additional information addition permission or additional information selection and a response message from the video viewing terminal. Reference numeral 749 denotes additional information to be transmitted whose addition has been decided to be permitted.

A storage 750 stores databases, various kinds of parameters, and following data and programs necessary for implementing the embodiment. The frame feature DB 214 is the frame feature DB shown in Fig. 6. The scene DB 216 is the scene DB shown in Fig. 6. The additional information DB 218 is the additional information DB shown in Fig. 6. Note that a video content DB may be provided although Fig. 7 illustrates none. However, the content DB is not an indispensable constituent element of the video processing apparatus 210 of this embodiment. The storage 750 stores the following programs. A video processing program 754 executes overall processing. A DB preparation module 755 prepares the above-described DBs (see Fig. 9A). A frame feature collation module 756 indicates the procedure of collating frame feature sequences in the video processing program 754. An additional information search module 757 searches for associated additional information in the video processing program 754. An additional information transmission module 758 transmits additional information to be added in the video processing program 754. If the video processing apparatus 210 performs processing of synchronizing a video content and additional information, the processing is performed by the additional information transmission module 758.

Note that Fig. 7 illustrates only the data and programs indispensable in this embodiment but not general-purpose data and programs such as the OS.

### (Arrangement of Additional Information Search Table)

Fig. 8 is a view showing the arrangement of the additional information search table 747 according to this embodiment. The additional information search table 747 is a table that stores the processing history from the frame feature sequence reception to the additional information search to assist the additional information search processing according to this embodiment.

The additional information search table 747 shown in Fig. 8 stores the following data in association with a received frame feature sequence 801 in which a matching scene is found as a result of collation with the frame feature DB 214.

Reference numeral 802 denotes a comparison target frame feature sequence that is read out from the frame feature DB 214 and matches the frame feature sequence 801. A frame feature sequence whose comparison difference is equal to or less than a prejudged threshold is judged as matching frame feature sequence and added to the original video content or derivative video content. A frame ID sequence 803 includes the matching comparison target frame feature sequence 802. A scene ID 804 is searched for from the frame ID sequence 803. All scenes have the same scene ID "199801121012", and the original scene and derivative scenes are indicated by letters. Reference numeral 805 indicates whether a scene is the original scene or derivative scene; 806, an ID of a video content including the scene of the scene ID 804; 807, additional information added to a scene in each video content; and 808, an additional information ID that specifies the additional information 807.

### <Processing Procedure of Video Processing Apparatus>

The processing procedure of causing the video processing apparatus 210 having the arrangement shown in Fig. 7 to implement the additional information search according this embodiment will be described next.

### (DB Preparation Procedure)

Fig. 9A is a flowchart showing the procedure of preparing the DBs (step S300 in Fig. 3) by the video processing apparatus according to this embodiment. The CPU 710 shown in Fig. 7 executes this flowchart using the RAM 740.

In step S901, a frame feature is extracted from each frame of a video content transmitted from the video content providing server 220 or the TV station 230. In step S903, a unique frame ID is added in the frame order, and the frame features are registered in the frame feature DB 214 in correspondence with the frame IDs. In step S905, a scene ID is added to a set of the start frame and end frame of each scene for which additional information is set, and registered in the scene DB 216. In step S907, an additional information ID and additional information are set in correspondence with each scene ID and registered in the additional information DB 218. In step S909, it is determined whether the processing has ended for all video contents. If an unprocessed video content remains, the process returns to step S901 to repeat the processing.

### <Video Processing Procedure>

Fig. 9B is a flowchart showing the video processing procedure of the video processing apparatus according to this embodiment. The CPU 710 shown in Fig. 7 executes this flowchart using the RAM 740.

In step S911, a frame feature is received from a video viewing terminal. In step S913, a sequence of predetermined number of received frame features are compared with the frame feature sequences in the frame feature DB 214. In step S915, it is determined based on the comparison result whether the frame feature sequences match under a predetermined condition (including whether the difference is equal to or smaller than a prejudged threshold). If the frame feature sequences match, the process advances to step S917 to search the additional information DB 218 for additional information based on a scene ID representing or including the matching frame feature sequence. The additional information search processing will be described later in detail with reference to Fig. 9C.

If the frame feature sequences do not match, the process advances to step S919. In step S919, it is judged whether additional information search by comparison with all frame features stored in the frame feature DB 214 has ended. To implement real-time additional information search, if the data amount of the stored frame features is enormous, the frame features may be put into groups by the video content type or the like, and the additional information search may be done in each group. Alternatively, parallel processing may be performed by assigning one CPU to processing of each group. Otherwise, a plurality of video processing apparatuses 210 may be provided. Each apparatus may be specialized to a video content type, and an apparatus may be selected, or parallel processing of a plurality of apparatuses may be performed.

When comparison with all target frame feature sequences in the frame feature DB 214 has ended, the process advances from step S919 to step S921. In step S921, if there exists additional information found by the loop of steps S913 to S919, the video viewing terminal of the frame feature transmission source is inquired about the additional information addition permission and selection of the additional information. In step S923, it is determined whether additional information addition is requested as the response to the inquiry. If additional information addition is requested, the process advances to step S925 to transmit the additional information to the video viewing terminal. If no additional information addition request is received, the processing ends without transmitting the additional information.

### (Additional Information Search Processing Procedure)

Fig. 9C is a flowchart showing the additional information search processing procedure (step S917) of the video processing apparatus according to this embodiment. The CPU 710 shown in Fig. 7 executes this flowchart using the RAM 740.

In step S931, the scene DB 216 is searched using the start frame ID and end frame of the scene with the matching frame feature sequence. In step S933, it is determined whether a corresponding scene ID exists. If no scene ID exists, the process advances to step S937. If the scene ID is found, the process advances to step S935 to read out the additional information from the additional information DB 218 using the acquired scene ID and temporarily save the additional information as a transmission candidate. In step S937, it is determined whether the scene DB 216 has wholly been searched. If the scene DB 216 has not wholly been searched yet, the process returns to step S931 to repeat the additional information search. If the scene DB 216 has wholly been searched, the process returns.

### <Hardware Arrangement of Video Viewing Terminal>

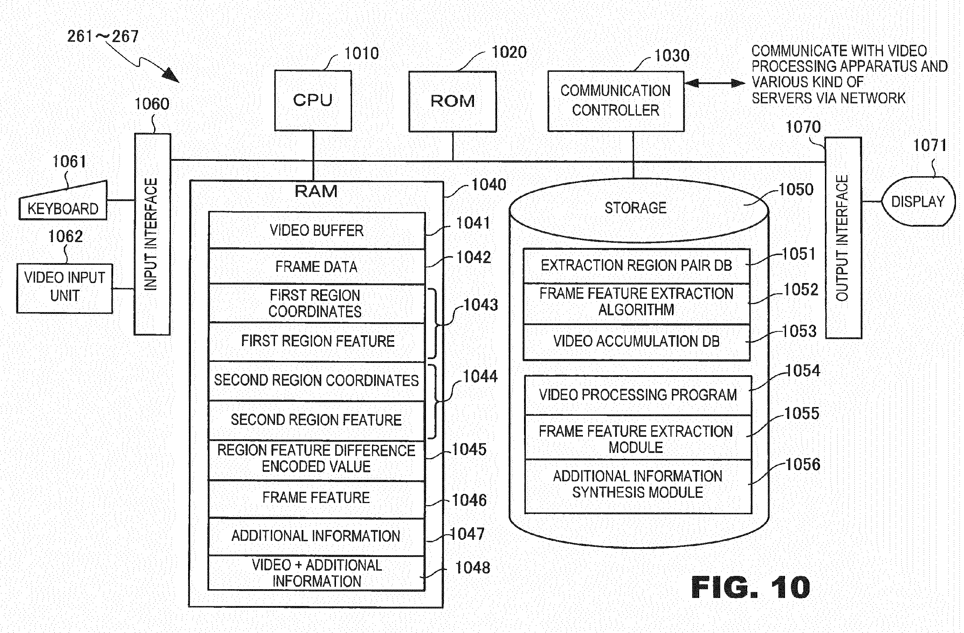

Fig. 10 is a block diagram showing the hardware arrangement of the video viewing terminals 261 to 267 according to this embodiment. Note that Fig. 10 illustrates only parts associated with the processing of this embodiment, and parts concerning the application purpose of each device are not illustrated.

Referring to Fig. 10, a CPU 1010 is a processor for arithmetic control and implements each functional component shown in Fig. 2 by executing a program. A ROM 1020 stores initial data, permanent data of programs and the like, and the programs. A communication controller 1030 communicates with the video processing apparatus 210 and various kinds of servers via the network 250. Communication can be either wireless or wired. Note that TV broadcast waves are received by a controller (not shown). However, in digital terrestrial TV broadcasting, communication by the common communication controller 1030 is also possible.

A RAM 1040 is a random access memory used by the CPU 1010 as a work area for temporary an area to store data necessary for implementing the embodiment is allocated in the RAM 1040. Reference numeral 1041 denotes a video buffer that stores an input video; 1042, frame data of each frame; 1043, first region coordinates to set a first region on a frame and a first feature as its feature; 1044, second region coordinates to set a second region on a frame and a second feature as its feature; 1045, a region feature difference encoded value that is a ternary value in the example of each dimension and is output by quantizing the difference between the first region feature and the second region feature; 1046, a frame feature generated by combining the region feature difference encoded values 1045 as many as the number of dimensions; 1047, additional information found and transmitted by the video processing apparatus 210; and 1048, display data in which the additional information 1047 is added to the video under reproduction.

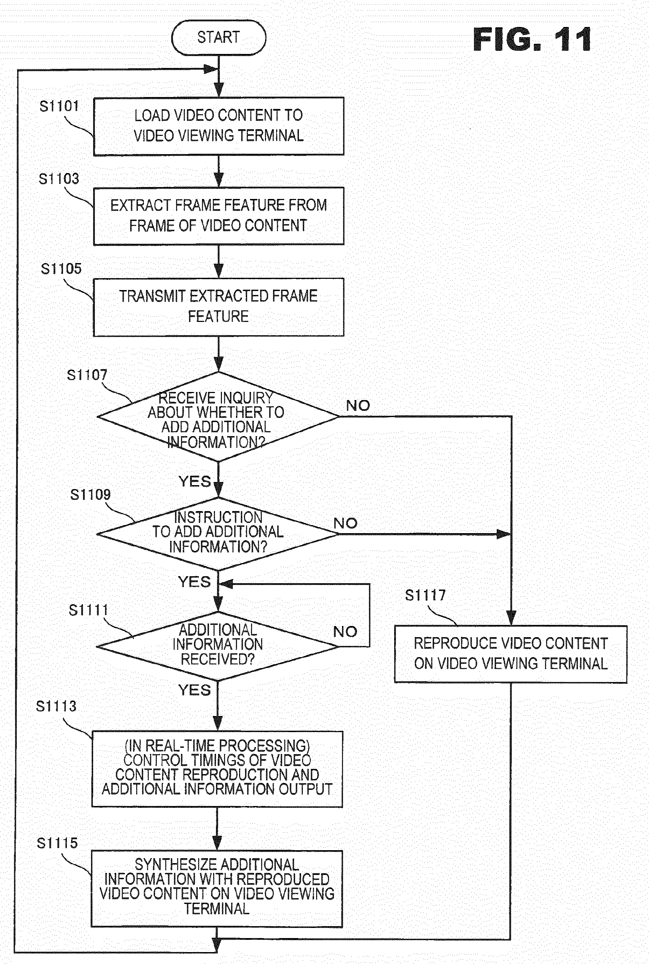

A storage 1050 stores databases, various kinds of parameters, and following data and programs necessary for implementing the embodiment. Reference numeral 1051 denotes an extraction region pair DB that stores all extraction region pairs used in this embodiment; 1052, a frame feature extraction algorithm shown in Figs. 5A to 5C; and 1053, a video accumulation DB that stores video contents. The storage 1050 stores the following programs. A video processing program 1054 executes overall processing (see Fig. 11). Reference numeral 1055 denotes a frame feature extraction module provided in the video processing program 1054; and 1056, an additional information synthesis module provided in the video processing program 1054 to synthesize additional information with a scene of a video content or synchronize additional information with a scene of a video content.

An input interface 1060 interfaces to an input peripheral device. A video input unit 1062 such as a DVD drive and a keyboard 1061 for instruction input are connected to the input interface 1060. An output interface 1070 interfaces to an output peripheral device. A display 1071 is connected to the output interface 1070.

Note that Fig. 10 illustrates only the data and programs indispensable in this embodiment but not general-purpose data and programs such as the OS.

### <Processing Procedure of Video Viewing Terminal>

The processing procedure of the video viewing terminal having the arrangement shown in Fig. 10 will be described next. Note that the gist of this embodiment is processing concerning additional information, and a description of other processes will be omitted.

### (Additional Information Processing Procedure)

Fig. 11 is a flowchart showing the additional information processing procedure of the video viewing terminal according to this embodiment. The CPU 1010 shown in Fig. 10 executes this flowchart using the RAM 1040.

In step S1101, a video content is loaded to the video viewing terminal. In step S 1103, a frame feature is extracted from each frame of the frame video content. In step S1105, the extracted frame feature is transmitted to the video processing apparatus 210 via the network 250.

Upon receiving a response from the video processing apparatus 210, in step S1107, it is determined whether the response is an inquiry about an additional information addition permission. If the response is not the inquiry, it is judged that no additional information is found. In step S1117, video content reproduction without additional information is continued. If the response is the inquiry, the process advances to step S1109 to judge whether the viewer has instructed to add the additional information. Without the additional information addition instruction, video content reproduction without additional information is continued in step S1117. If the additional information addition instruction is received, additional information reception from the video processing apparatus 210 is waited in step S1111. Upon receiving the additional information, the process advances to step S1113. In real-time processing, the timings of video content reproduction and additional information output are controlled. In step S1115, the video content and the additional information are synthesized and reproduced on the display 1071 of the video viewing terminal.

### [Third Embodiment]

In the second embodiment, as shown in Fig. 6, the frame feature DB 214, the scene DB 216, and the additional information DB 218 are provided to search for additional information. However, additional information can be added to a video content even when additional information is registered not for each scene but for each frame. In the third embodiment, one DB that associates a frame feature with additional information is provided, thereby performing the same additional information search as in the second embodiment. According to this embodiment, additional information can be added for each frame without temporary conversion to a scene ID, unlike the second embodiment. This facilitates synchronization control and speedup of additional information search processing.

Note that this embodiment is different from the second embodiment only in the structure of the DB. The rest of the arrangement and operation is the same as in the second embodiment, and a description of the same arrangement will be omitted.

### <Arrangement of Frame Feature/Additional Information DB>

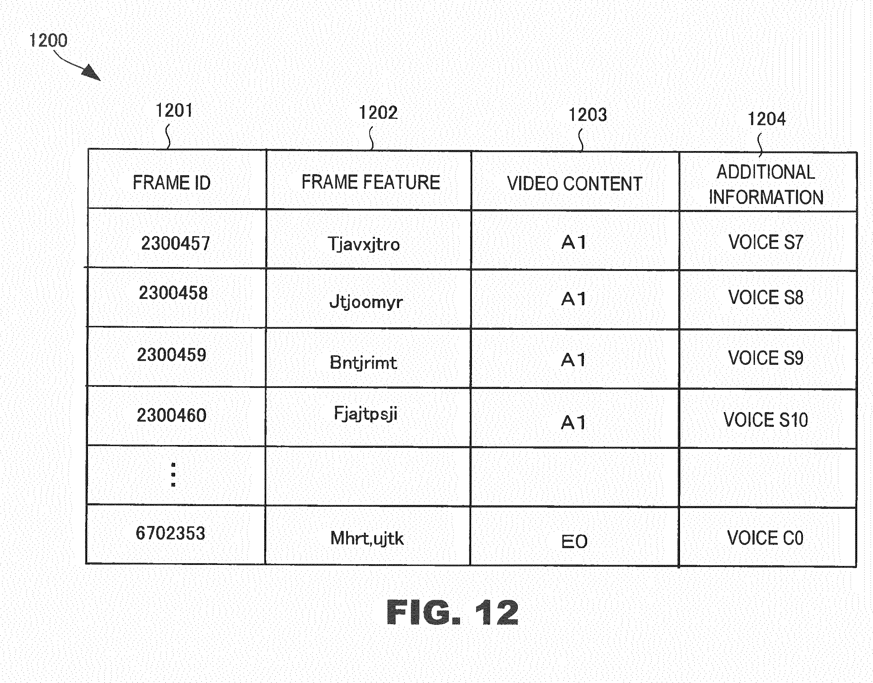

Fig. 12 is a view showing the arrangement of a frame feature/additional information DB 1200 of a video processing system according to this embodiment. The frame feature/additional information DB 1200 replaces the three DBs of the second embodiment.

The frame feature/additional information DB 1200 is a frame feature/additional information unit, in which the following pieces of information are stored in association with a frame ID 1201. Reference numeral 1202 denotes a frame feature of a frame specified by the frame ID 1201; 1203, an ID of a video content; and 1204, additional information added to each frame. In Fig. 12, each voice is registered as additional information in correspondence with each frame ID of a video content A1 that is a derivative video content.

Using the frame feature/additional information DB 1200 having the above-described arrangement facilitates adding additional information in correspondence with each frame at the time of reproduction of the frames.

### [Fourth Embodiment]

In the second and third embodiments, the video viewing terminal of the transmission source of a frame feature is inquired about permission of additional information addition or selection of additional information. However, the video viewing terminal may want the viewer to confirm a search result or inquiry about additional information in a place far apart from the video viewing terminal while performing processing such as recording. In this embodiment, a search result or inquiry about additional information is transmitted not to the video viewing terminal but to another device such as a portable terminal. According to this embodiment, since the search result or inquiry about additional information is separated from the video viewing terminal, the user can perform additional information addition processing for a video content without any restriction of the video viewing terminal.

Note that this embodiment is different from the second embodiment only in part of the sequence representing the operation procedure. The rest of the arrangement and operation can be changed in the same way, and a description of the same arrangement will be omitted.

### <Operation Procedure of Video Processing System>

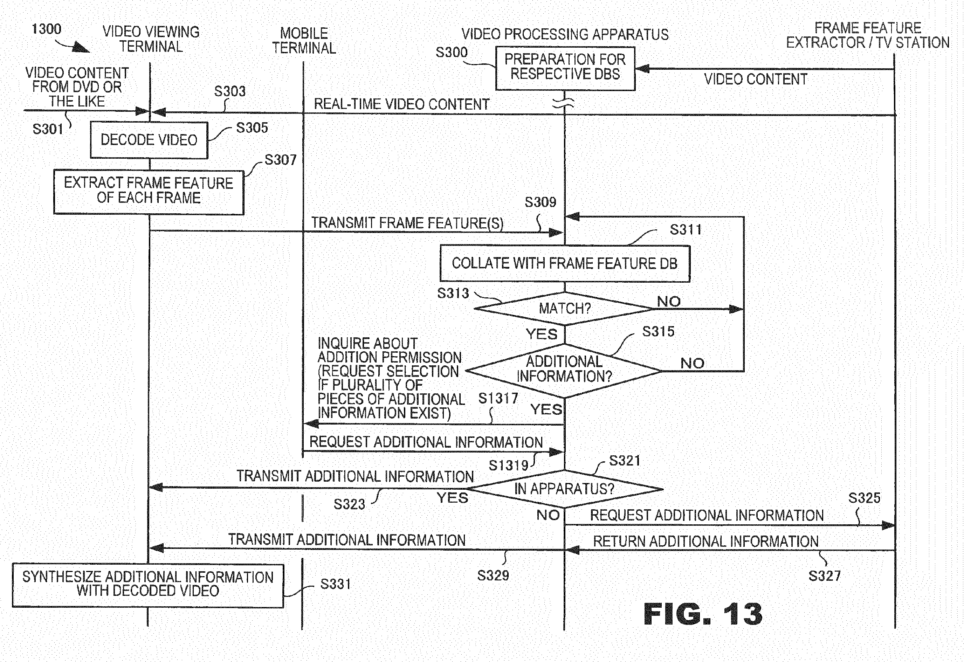

Fig. 13 is a sequence chart showing an operation procedure 1300 of a video processing system according to this embodiment. Note that the same reference numerals as in Fig. 3 denote the same sequential processes in Fig. 13. Fig. 13 is different from Fig. 3 in the processes of steps S 1317 and S1319. The rest is the same, and the description of Fig. 3 is applied.

In step S1317, an additional information addition permission or an inquiry about additional information selection is transmitted to a mobile terminal. In step S 1319, an additional information addition request is returned from the mobile terminal to the video processing apparatus 210 in accordance with a user instruction.

### [Fifth Embodiment]

In the second to fourth embodiments, the video processing apparatus executes frame feature collation and additional information search. However, when the video processing apparatus performs viewer registration, management, and the like and causes a video content providing server or TV station holding video contents to perform frame feature collation and additional information search, the load can be distributed. In this embodiment, a video content providing portion that holds video contents performs frame feature collation and additional information search. According to this embodiment, the load of video processing can be distributed.

Note that the arrangement and operation of the video processing system according to this embodiment are the same as in the second embodiment except the apparatus including the functional components shown in Fig. 2. Hence, only newly added functional portions will be described, and a description of the internal arrangements and operations of the same functional components will be omitted.

### <Arrangement of Video Processing System>

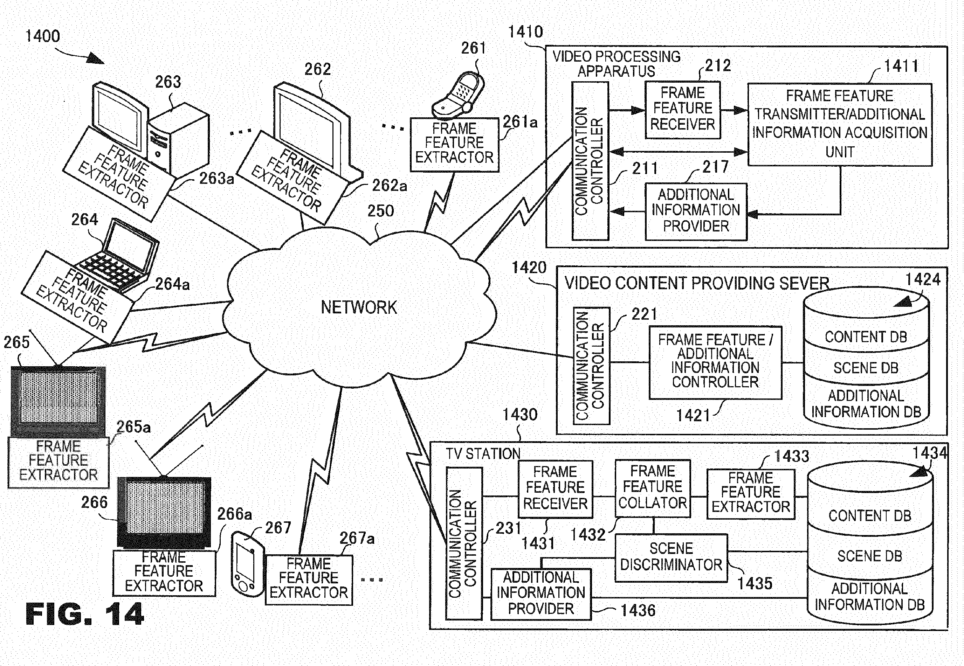

Fig. 14 is a block diagram showing the arrangement of a video processing system 1400 according to this embodiment.

A video processing apparatus 1410 shown in Fig. 14 includes a frame feature transmitter/additional information acquisition unit 1411 that transmits a frame feature received from a video viewing terminal and acquires additional information. The frame feature transmission destination and the additional information transmission source are a video content providing server 1420 and a TV station 1430.

The TV station shown in Fig. 14 includes a frame feature receiver 1431, a frame feature collator 1432, a scene discriminator 1435, and an additional information provider 1436, which are provided in the video processing apparatus in Fig. 2. The TV station also includes a content DB that stores video contents, a scene DB, and an additional information DB as a DB 1434. In this embodiment, since the frame feature DB that stores frame features is not provided, the TV station also includes a frame feature extractor 1433 that extracts a frame feature from each frame of a video content read out from the content DB. Note that the frame feature extractor 1433 is the same as the frame feature extractor provided in a video viewing terminal.

The video content providing server 1420 shown in Fig. 14 basically has the same arrangement as the TV station 1430 including a DB 1424. A frame feature/additional information controller 1421 integrates the respective components of the TV station, which collate a frame feature and search for additional information.

Note that the functional components can be arranged in each apparatus in a manner different from the second or fifth embodiment. The arrangement is not limited unless it adversely affects the processing speed, the storage capacity, congestion of communication, and the like.

### [Sixth Embodiment]

In the second to fifth embodiments, service providing concerning additional information is implemented by the initiative of the video processing apparatus. The intent of a viewer is achieved by a passive response to an inquiry from the video processing apparatus in both additional information addition permission and additional information selection. In this embodiment, a case will be described in which a UI (User Interface) that allows the viewer to actively set the operation of the video processing apparatus concerning additional information is provided. According to this embodiment, it is possible to receive providing of the service concerning additional information in accordance with the user setting. Note that the basic additional information search according to this embodiment can be performed using the second to fifth embodiments, and a description thereof will be omitted here. An arrangement for implementing the additional function of the embodiment will be described here.

### <Table Representing Viewer Setting Information Concerning Additional Information>

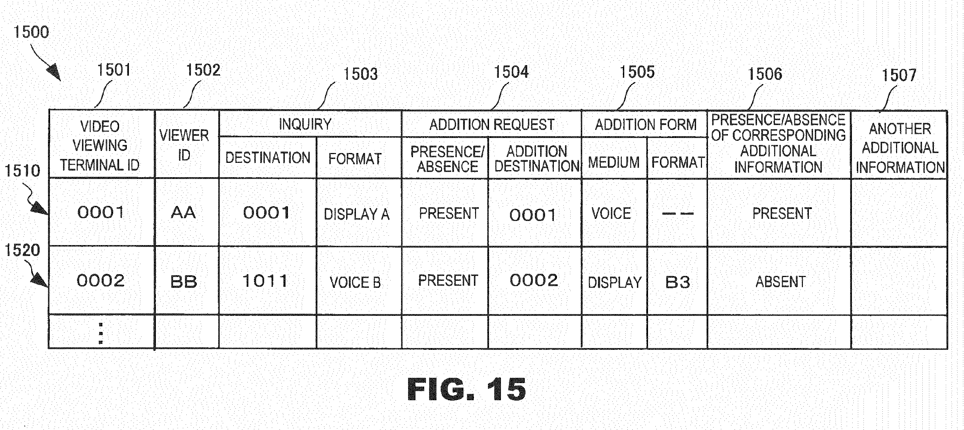

Fig. 15 is a view showing a table 1500 representing viewer setting information concerning additional information in a video processing system according to this embodiment. The table representing viewer setting information concerning additional information can be arranged in any apparatus of the video processing system shown in Figs. 2 and 14. However, the table is preferably arranged in the apparatus having the function of providing the additional information.

The table 1500 shown in Fig. 15 stores information 1503 about an inquiry set by a viewer in association with a video viewing terminal ID 1501 and a viewer ID 1502. The information 1503 includes the destination and format of the inquiry. The table also stores information 1504 about an addition request set by a viewer in association with the video viewing terminal ID 1501 and the viewer ID 1502. The information 1504 includes the presence/absence of an addition request and an additional information notification destination. The table also stores information 1505 about an addition form set by a viewer in association with the video viewing terminal ID 1501 and the viewer ID 1502. The information 1505 includes the medium of additional information and the format of additional information. The table also stores presence/absence 1506 of additional information of another video content having the same scene and corresponding to the information about the additional information set by a viewer in association with the video viewing terminal ID 1501 and the viewer ID 1502. The table also stores additional information 1507 of another video content having the same scene but not corresponding to the information about the additional information set by a viewer in association with the video viewing terminal ID 1501 and the viewer ID 1502. Note that the set contents are not limited to those shown in Fig. 15.

Fig. 15 shows two setting examples. In an example 1510, the video viewing terminal ID is "0001 ", and settings by a viewer who has a viewer ID "AA" are registered. Whether to add additional information or selection of additional information is displayed on the video viewing terminal in the format of display A, as indicated by the destination. For example, if the video viewing terminal is a TV, an inquiry is displayed on the TV screen in the format of display A. The answer of the viewer for the inquiry is set in the addition request. Additional information addition is requested, and the addition destination is the video viewing terminal, for example, the TV in the above-described example. The addition form wanted by the viewer is additional information by voice, and any format is usable. The information consequently represents that another video content has the additional information by voice. On the other hand, in an example 1520, the video viewing terminal ID is "0002", and settings by a viewer who has a viewer ID "BB" are registered. Whether to add additional information or selection of additional information is displayed on another terminal (having an ID "1011 ") in the format of voice B, as indicated by the destination. For example, if the video viewing terminal is a TV, and the other terminal is a mobile phone, an inquiry is uttered from the mobile phone in the format of voice B. The answer of the viewer for the inquiry is set in the addition request. Additional information addition is requested, and the addition destination is the video viewing terminal, for example, the TV in the above-described example. The addition form wanted by the viewer is additional information by display, and the format is B3. The information consequently represents that no other video content has the additional information by display in the format B3.

Note that although Fig. 15 shows no example in which the viewer specifies specific additional information and searches for it, this can also be done by simple change in Fig. 15. In this case, the additional information specified by the viewer may be searched, and the presence/absence of the additional information may be notified. If the additional information is not present, another additional information may be notified. In addition, special terminal control may be performed so that additional information is displayed by displaying a character string at a designated position of a frame of an arbitrary scene on the screen, like viewer-uploaded comment insertion in Nico Nico Douga.

### [Other Embodiments]

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions. The present invention also incorporates a system or apparatus that somehow combines different features included in the respective embodiments. Note that in the above embodiments, collation of a scene formed from a series of a plurality of frames has been described. However, a video content can also be specified by collating one frame depending on the frame feature, the present invention incorporates this technique as well.

The present invention is applicable to a system including a plurality of devices or a single apparatus. The present invention is also applicable even when a control program for implementing the functions of the embodiments is supplied to the system or apparatus directly or from a remote site. Hence, the present invention also incorporates the control program installed in a computer to implement the functions of the present invention on the computer, a medium storing the control program, and a WWW (World Wide Web) server that causes a user to download the control program.

This application is based upon and claims the benefit of priority from Japanese patent application No. 2011-067642, filed on March 25, 2011, the disclosure of which is incorporated herein in its entirety by reference.

## Claims

1. A video processing system for outputting additional information to be added to a video content, comprising:
a frame feature extractor that extracts a frame feature of a frame included in an arbitrary video content;
a video content extractor that extracts a video content group having a scene formed from a series of a plurality of frames in the arbitrary video content by comparing frame features of the arbitrary video content extracted by said frame feature extractor with frame features of other video contents, the video content group including an original video content with the scene unaltered and one or more derivative video contents with the scene altered; and
an additional information extractor that extracts additional information added to the scene of the extracted video content group.

2. The video processing system according to claim 1, further comprising a storage that stores the additional information added to the scene of the video content in association with the frame feature extracted from the video content,
wherein said video content extractor extracts the scene of the video content group by comparing the frame feature of the arbitrary video content extracted by said frame feature extractor with the frame feature of the video contents stored in said storage, and
said additional information extractor extracts the additional information added to the scene of the video content group extracted from said storage.

3. The video processing system according to claim 2, wherein said storage comprises:
a frame feature storage that stores the frame feature in association with each frame of the video content;
a scene storage that stores the series of the plurality of frames as one scene; and
an additional information storage that stores the additional information in association with each of scenes.

4. The video processing system according to claim 2, wherein said storage comprises:
an additional information storage that stores an identifier used to identify the additional information added to the video content in association with the frame feature extracted from the video content; and
a holder that holds, in association with the identifier, the additional information added to the scene of the video content.

5. The video processing system according to any one of claims 1 to 4, further comprising an additional information notification unit that notifies the additional information added to the video content group extracted by said additional information extractor.

6. The video processing system according to any one of claims 1 to 5, further comprising:
an inquiry unit that inquires about an instruction of whether to add the additional information and a selection of the additional information to be added when a plurality of pieces of extracted additional information exist; and
an addition controller that controls addition of the additional information to the arbitrary video content in correspondence with a response of the instruction and the selection.

7. The video processing system according to claim 5 or 6, further comprising:
a first device including a display that displays the arbitrary video content; and
a second device including one of said notification unit and the inquiry unit, said second device being different from said first device.

8. The video processing system according to any one of claims 5 to 7, further comprising a user interface that receives, from a user, an instruction of execution of additional information extraction by said additional information extractor and additional information notification by said additional information notification unit or an instruction of execution of inquiry by said inquiry unit and setting of a format of the notification or the inquiry.

9. The video processing system according to any one of claims 1 to 8, wherein said frame feature extractor generates the frame feature by combining, as many as the number of region pairs, differences between a pair of region features calculated for each of the region pairs, each region of the region pairs on each frame in different sizes.

10. The video processing system according to claim 9, wherein the region feature is represented by a luminance.

11. The video processing system according to any one of claims 1 to 10, wherein the additional information includes information formed from at least one of a video, a voice, and a text.

12. A video processing method of outputting additional information to be added to a video content, comprising:
extracting a frame feature of a frame included in an arbitrary video content;
extracting a video content group having a scene formed from a series of a plurality of frames in the arbitrary video content by comparing the frame features of the arbitrary video content extracted in said frame feature extracting step with frame features of other video contents, the video content group including an original video content with the scene unaltered and one or more derivative video contents with the scene altered; and
extracting additional information added to the scene of the extracted video content group.

13. A video processing apparatus for outputting additional information to be added to a video content, comprising:
a frame feature extractor that extracts a frame feature of a frame included in an arbitrary video content;
a video content extractor that extracts a video content group having a scene formed from a series of a plurality of frames in the arbitrary video content by comparing frame features of the arbitrary video content extracted by said frame feature extractor with frame features of other video contents, the video content group including an original video content with the scene unaltered and one or more derivative video contents with the scene altered;
an additional information extractor that extracts additional information added to the scene of the extracted video content group; and
an additional information notification unit that notifies the additional information added to the scene of the video content group extracted by said additional information extractor.

14. The video processing apparatus according to claim 13, further comprising a storage that stores the additional information added to the scene of the video content in association with the frame feature extracted from the video content,
wherein said video content extractor extracts the scene of the video content group by comparing the frame features of the arbitrary video content extracted by said frame feature extractor with frame features of the video contents stored in said storage, and
said additional information extractor extracts the additional information added to the scene of the video content group extracted from said storage.

15. A control method of a video processing apparatus for outputting additional information to be added to a video content, comprising:
extracting a frame feature of a frame included in an arbitrary video content;
extracting a video content group having a scene formed from a series of a plurality of frames in the arbitrary video content by comparing frame features of the arbitrary video content extracted in said frame feature extracting step with frame features of other video contents, the video content group including an original video content with the scene unaltered and one or more derivative video contents with the scene altered;
extracting additional information added to the scene of the extracted video content group; and
notifying the additional information added to the video content group extracted in said additional information extracting step.

16. A computer-readable storage medium storing a control program of a video processing apparatus for outputting additional information to be added to a video content, the control program causing a computer to execute the steps of:
extracting a frame feature of a frame included in an arbitrary video content;
extracting a video content group having a scene formed from a series of a plurality of frames in the arbitrary video content by comparing frame features of the arbitrary video content extracted in said frame feature extracting step with frame features of other video contents, the video content group including an original video content with the scene unaltered and one or more derivative video contents with the scene altered;
extracting additional information added to the scene of the extracted video content group; and
notifying the additional information added to the video content group extracted in said additional information extracting step.

17. A video processing apparatus for adding additional information to a video content and outputting the added video content, comprising:
a frame feature extractor that extracts a frame feature of a frame included in an arbitrary video content;
a frame feature transmitter that transmits the frame feature extracted by said frame feature extractor;
an additional information receiver that receives the additional information added to a scene of a video content group from a transmission destination of the frame feature, the scene of said video content group being extracted based on frame features of a scene formed from a series of a plurality of frames of the arbitrary video content, said video content group including an original video content with the scene unaltered and one or more derivative video contents with the scene altered; and
a video content reproducing unit that reproduces the arbitrary video content with adding the additional information to the arbitrary video content.

18. A control method of a video processing apparatus for adding additional information to a video content and outputting the added video content, comprising:
extracting a frame feature of a frame included in an arbitrary video content;
transmitting the frame feature extracted in the extracting the frame feature;
receiving the additional information added to a scene of a video content group from a transmission destination of the frame feature, the scene of said video content group being extracted based on frame features of a scene formed from a series of a plurality of frames of the arbitrary video content, said video content group including an original video content with the scene unaltered and one or more derivative video contents with the scene altered; and
reproducing the arbitrary video content with adding the additional information to the arbitrary video content.

19. A computer-readable storage medium storing a control program of a video processing apparatus for adding additional information to a video content and outputting the added video content, the control program causing a computer to execute the steps of:
extracting a frame feature of a frame included in an arbitrary video content;
transmitting the frame feature extracted in the extracting the frame feature;
receiving the additional information added to a scene of a video content group from a transmission destination of the frame feature, the scene of said video content group being extracted based on frame features of a scene formed from a series of a plurality of frames of the arbitrary video content, said video content group including an original video content with the scene unaltered and one or more derivative video contents with the scene altered; and
reproducing the arbitrary video content with adding the additional information to the arbitrary video content.
